# EUROPEAN PATENT SPECIFICATION

(11) **EP 1 033 577 B1**
(45) Date of publication and mention of the grant of the patent: **02.06.2004**
(21) Application number: 00301778.7
(22) Date of filing: 03.03.2000
(51) Int. Cl.: G01N 35/00, G01N 1/28

(54) **Test piece holder and apparatus for removing analyte excess incorporating the same**
Prüfstück-Halter und Vorrichtung zum Entfernen von überflüssigen Analyten unter Verwendung dieses Halters
Support d'échantillon et dispositif pour éliminer un excess d'analyte incorporant un tel support

(30) Priority: 04.03.1999 JP 5658099
(43) Date of publication of application: 06.09.2000
(73) Proprietor: Kyoto Daiichi Kagaku Co., Ltd., Kyoto-shi, Kyoto 601-8045 (JP)
(72) Inventor: Naka, Michio, Higashi Kujo, Minami-ku, Kyoto 601 (JP); Yamagata, Hidenari, Higashi Kujo, Minami-ku, Kyoto 601 (JP); Hirayama, Koji, Higashi Kujo, Minami-ku, Kyoto 601 (JP)
(74) Representative: Hayes, Adrian Chetwynd

(56) References cited:
- EP-A- 0 795 600
- EP-A- 0 978 725
- NL-C- 1 008 782
- US-A- 4 943 416
- US-A- 5 698 162

## Description

### BACKGROUND OF THE INVENTION

### 1. Field of the invention:

This invention relates generally to analysis of a liquid analyte using a test piece. More particularly, it relates to a test piece holder which is capable of removing an analyte excess. It also relates to an analyte excess removing device incorporating such a test piece holder.

### 2. Description of the Related Art:

In urine analysis, use is typically made of a strip-like test piece which carries a series of chemical pads each. For analysis, the test piece is immersed in an urine analyte for reaction with the chemical pads to determine, for example, the concentration of glucose, protein, occult blood or ketone body contained in an urine analyte, or the pH of the analyte, respectively.

Typically, a known automatic or semi-automatic urine test apparatus utilizing such an analysis process includes a test piece holder for placing a test piece (which has been previously immersed in an urine analyte), and a transfer mechanism for moving the test piece holder together with the test piece to a measurement position where the chemical pads are successively detected by an optical sensor for determining the degree of color reaction at the pads. When the test piece is placed on the test piece holder, it is necessary to remove an excess of the urine analyte for the following reasons.

First, depending on an item of analysis, the speed of reaction at a relevant chemical pad is influenced by the amount of urine deposited or absorbed by that pad. In particular, the measurement of urine glucose concentration is greatly affected by the amount of urine excess because supply of oxygen needed for color reaction is blocked by the water content of the urine excess.

Secondly, since a test piece carries a plurality of chemical pads, it is possible that a chemical substance or substances from each pad may dissolve in an urine excess and thereby contaminate other pads of the same test piece, thereby resulting in inaccurate measurement.

In the third place, when analyzing a plurality of test pieces in succession with a same test piece holder, an urine excess remaining on the test piece holder after replacement of one test piece may contaminate the next test piece which is immersed with a different urine analyte. This also results in inaccurate analysis.

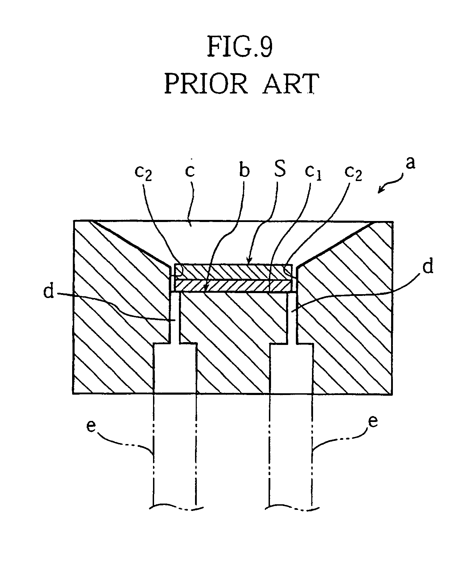

For these reasons, the prior art automatic or semi-automatic urine test apparatus (Mini Aution MA-4240 and Aution Mini MA-4210 from A. Menarini Diagnostics S.p.A.) incorporates an analyte excess removing device. A typical example of such a device is illustrated in Fig. 9 of the accompanying drawings.

As shown in Fig. 9, a prior art analyte excess removing device designated by reference sign (a) includes a test piece holder (b) which is designed to have a pump-sucking function. More specifically, the test piece holder (b) has a top surface provided with an elongate holding groove (c) which is defined by a bottom wall (c₁) corresponding in configuration to a test piece (S) for reception thereof, and a pair of ridges (c₂) each rising from a respective longitudinal edge of the bottom wall (c₁). Each of the ridges (c₂) serves to guide the test piece (S) into the holding groove (c) while preventing lateral deviation of the test piece (S). The bottom wall (c₁) of the holding groove (c) is penetrated by a plurality of pores (d) each of which is connected to a flexible tube (e) which is, in turn, connected to a suction pump (not shown).

In operation, as soon as a test piece (S) having been previously immersed in an urine analyte is placed in the holding groove (c), a suction force is applied to the holding groove by the suction pump through the flexible tube (e) and a respective one of the pores (d). Thus, an excess of the urine analyte is removed immediately under the positive suction.

However, the prior art analyte excess removing device (a) described above requires a suction pump and its related accessories such as flexible tubes (e) for excess removal, which results in added cost. Further, the suction pump and the flexible tubes (e) must be washed periodically, so that maintenance of these components is not considered easy.

### SUMMARY OF THE INVENTION

It is, therefore, an object of the present invention to provide a test piece holder which is capable of removing an analyte excess without relying on a suction pump and its related accessories.

Another object of the present invention is to provide an analyte excess removing device which incorporates such a test piece holder.

According to a first aspect of the present invention, there is provided a test piece holder comprising an elongate top surface, and a pair of side surfaces located below the top surface, the top surface being provided with a test piece holding groove defined by an elongate bottom wall and a pair of ridges each rising from a respective longitudinal edge of the bottom wall, wherein each of the ridges is formed with a plurality of upper capillary grooves extending vertically to open into the test piece holding groove, the bottom wall being formed with a plurality of capillary pores in corresponding relationship to and in communication with the upper capillary grooves, the capillary pores being open toward a respective one of the side surfaces. The operating principles and technical advantages of the test piece holder structured as above will be specifically described hereinafter on the basis of a preferred embodiment.

Preferably, each of the side surfaces may be formed with a plurality of lower capillary grooves in corresponding relationship to and in communication with the upper capillary grooves and the capillary pores. In this case, the upper capillary grooves, the capillary pores and the lower capillary grooves, respectively, may be arranged in a row at a constant interval. Further, the upper capillary grooves, the capillary pores and the lower capillary grooves may be equal in width.

Preferably, the width of the upper capillary grooves, the capillary pores and the lower capillary grooves may be 0.4-1.0 mm, particularly 0.6-0.8 mm. Further, each of the upper capillary grooves may have a depth which is larger than its width. Similarly, each of the lower capillary grooves may have a depth which is larger than its width.

Preferably, each of the upper capillary grooves may penetrate horizontally through a respective one of the ridges.

Preferably, each of the side surfaces may be configured to taper downward.

According to a second aspect of the present invention, there is provided a test piece holder comprising an elongate top surface, and a pair of side surfaces located below the top surface, the top surface being provided with a test piece holding groove defined by an elongate bottom wall and a pair of ridges each rising from a respective longitudinal edge of the bottom wall, wherein the bottom wall is formed with a plurality of capillary pores communicating with the test piece holding groove, each of the side surfaces being formed with a plurality of lower capillary grooves in corresponding relationship to and in communication with the capillary pores.

According to a third aspect of the present invention, there is provided an analyte excess removing device comprising the test piece holder as defined above, and a receptacle for receiving the test piece holder with the test piece holding groove exposed upwardly.

Preferably, the receptacle may have a bottom discharge opening for effectively discharging the analyte excess which collects at the bottom of the receptacle.

In a preferred embodiment, the receptacle tapers downward when each side surface of the test piece holder also tapers downward.

Other objects, features and advantages of the present invention will become apparent from the following description of the preferred embodiment given with reference to the accompanying drawings.

### BRIEF DESCRIPTION OF THE DRAWINGS

Fig. 1 is a perspective view, in an exploded state, of an analyte excess removing device embodying the present invention.
Fig. 2 is an exploded side view of the same excess removing device.
Fig. 3 is a plan view showing the same excess removing device.
Fig. 4 is an enlarged fragmentary plan view showing the same excess removing device.
Fig. 5 is a sectional view taken along lines V-V in Fig. 4.
Fig. 6 is a sectional view taken along lines VI-VI in Fig. 4.
Fig. 7 is a schematic side view showing a test apparatus incorporating the excess removing device.
Fig. 8 is a graph showing comparison in excess removing ability between the analyte excess removing device of the present invention and that of the prior art.
Fig. 9 is a sectional view showing a prior art suction type excess removing device.

### DETAILED DESCRIPTION OF THE PREFERRED EMBODIMENTS

The preferred embodiment of the present invention will be specifically described with reference to the accompanying drawings.

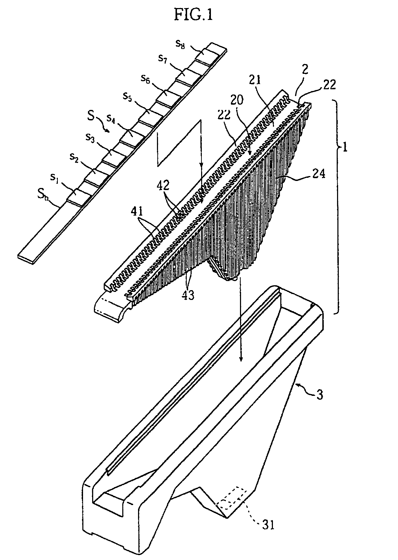

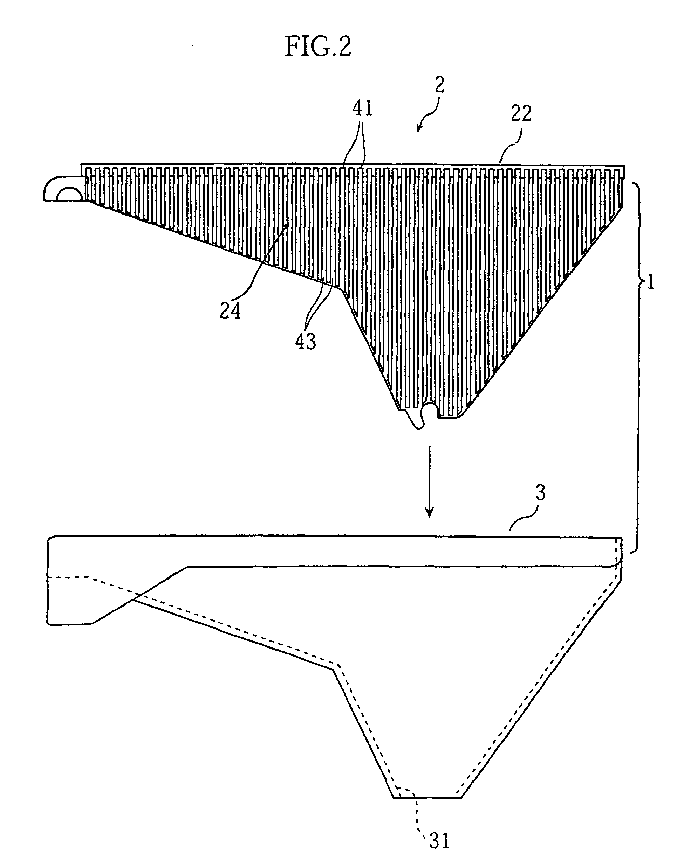

Referring to the drawings, an analyte excess removing device embodying the present invention is generally designated by reference numeral 1 (see Figs. 1 and 2). The analyte excess removing device 1 comprises a test piece holder 2 and a receptacle 3 in which the holder 2 is received.

As better shown in Figs. 1 and 2, the test piece holder 2 is a shaped plate which has a top surface provided with a holding groove 20. The test piece holder 2 may be formed by molding ABS resin for example. The test piece holder 2 is received in the receptacle 3 in such a manner that the holding groove 20 is upwardly exposed.

As also shown in Fig. 1, a test piece S comprises a strip S_{b} made of a plastic material. The strip S_{b} has an upper surface carrying a series of chemical pads s₁-s₈ each for determining, for example, the concentration of glucose, protein, occult blood or ketone body contained in an urine analyte, or the pH of the analyte, respectively.

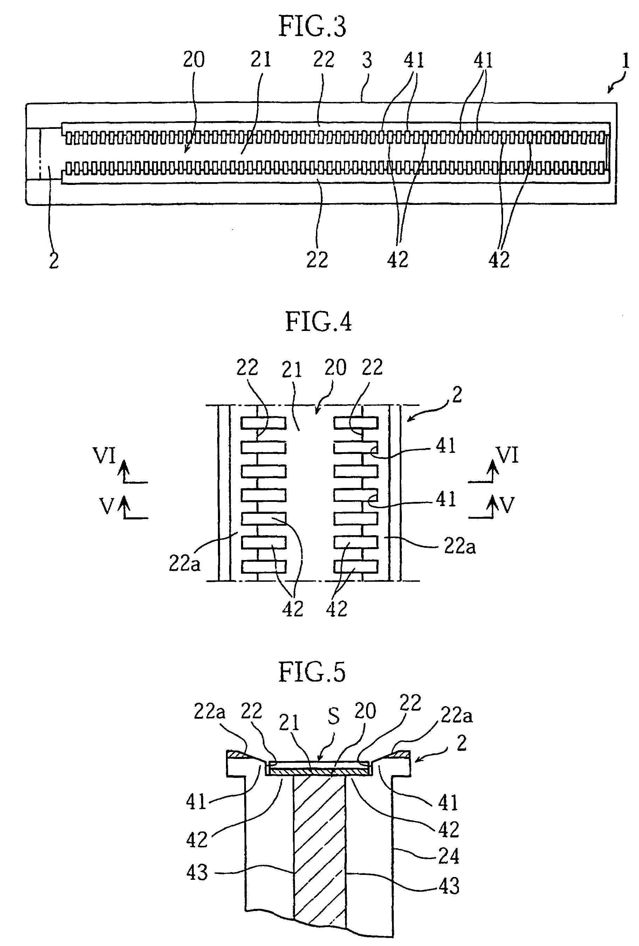

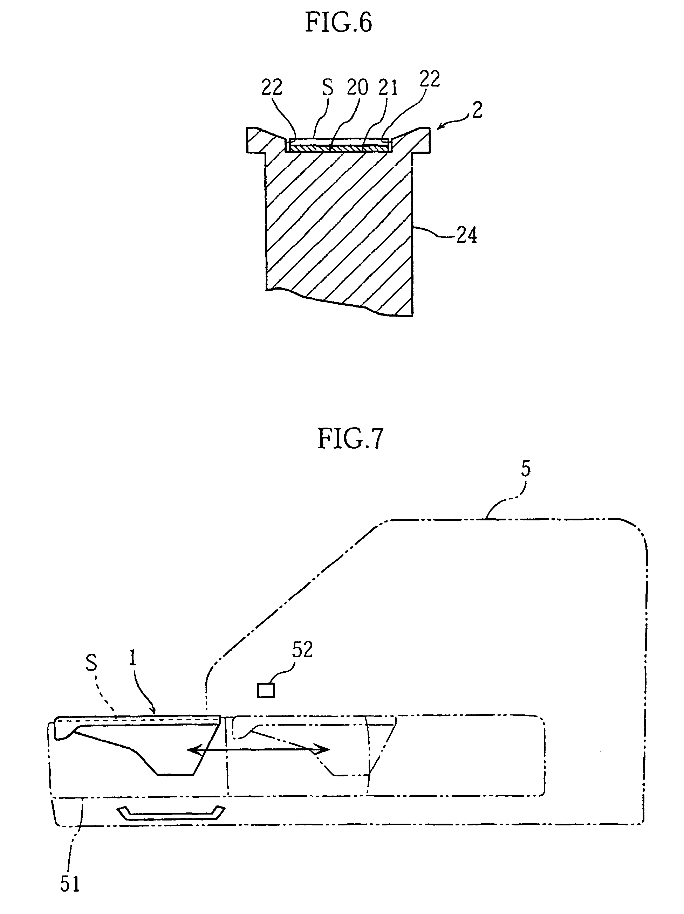

The holding groove 20 of the test piece holder 2 is configured to suitably receive the test piece S. More specifically, as shown in Figs. 1, 4 and 6, the holding groove 20 is defined by a bottom wall 21 corresponding in configuration to the test piece S, and a pair of ridges 22 each rising from a respective longitudinal edge of the bottom wall 21. In the illustrated embodiment, each of the ridges 22 is inclined toward the bottom wall 21 for gravitationally guiding the test piece S into the holding groove 20 (see Figs. 5 and 6).

Each ridge 22 is formed with a plurality of upper capillary grooves 41 which extend vertically to the bottom wall 21 of the holding groove 20, as shown in Figs. 3-5. In the illustrated embodiment, the upper capillary grooves 41 are spaced from each other at a constant interval. The width of the upper capillary grooves 41 may be 0.4-1.0 mm, preferably 0.6-0.8 mm, for example. If the groove width is smaller than 0.4 mm, difficulty arises in forming the upper capillary grooves 41 by molding. If the groove width is larger than 1.0 mm, the upper capillary grooves 41 may fail to provide a sufficient capillary action needed for sucking an excess of the analyte. The interval between the upper capillary grooves 41 is constant and may be rendered as small as possible, provided that the molding of the test piece holder 2 can be performed without problem. The depth of each upper capillary groove 41 should be preferably larger than the width of that groove for increasing the amount of the analyte excess sucked per groove. In the illustrated embodiment, each upper capillary groove 41 penetrates horizontally or laterally through the ridge 22 for increasing the capacity of sucking the analyte excess.

As also shown in Figs. 3-5, the bottom wall 21 of the holding groove 20 is provided with a plurality of capillary pores 42 in corresponding relationship to the upper capillary grooves 41 for communicating therewith. These capillary pores 42 penetrate vertically through the bottom wall 21 and correspond in width to the upper capillary grooves 41.

Further, the test piece holder 2 has, under the holding groove 20, a pair of side surfaces 24 each of which is formed with lower capillary grooves 43 in corresponding relationship to the upper capillary grooves 41 and the capillary pores 42. The lower capillary grooves 43 extend vertically downward from the bottom wall 21 of the holding groove 20 in communication with the upper capillary grooves 41 through the capillary pores 42. The lower capillary grooves 43 correspond in width to the upper capillary grooves 41 and the capillary pores 42. The depth of the lower capillary grooves 43, which is larger than their width, may be suitably determined in consideration of technical feasibility of molding the test piece holder 2.

Returning to Figs. 1 and 2, the test piece holder 2 is shaped to taper downward. Thus, the receptacle 3 for receiving the test piece holder 2 is correspondingly configured. More specifically, the receptacle 3 is a container which is open upwardly and which tapers downward in corresponding relationship to the test piece holder 2 for snugly receiving the latter. The bottom tapering end of the receptacle 3 is formed with a discharge opening 31 for discharging the analyte excess sucked downward by capillary action, as described hereinafter. The receptacle 3 may be made of ABS resin, for example, by molding.

The analyte excess removing device 1 including the test piece holder 2 and the receptacle 3 is mounted at a transfer mechanism 51 of an urine test apparatus 5, as schematically illustrated in Fig. 7. The transfer mechanism 51 reciprocates between a standby position outside the housing of the test apparatus 5 and a measuring position inside the housing. At the standby position (indicated by solid lines in Fig. 7), the holding groove 20 of the test piece holder 2 is exposed for replacing an analyzed test piece with a new one. The test apparatus 5 is internally provided with an optical sensor 52 for optically detecting the degree of color reaction at the respective chemical pads s₁-s₈ of the test piece S. Thus, while moving to the measuring position (indicated by phantom lines), the chemical pads s₁-s₈ successively pass under the optical sensor 52.

The analyte excess removing device 1 and the urine test apparatus 5 incorporating it operate in the following manner.

Initially, the transfer mechanism 51 of the urine test apparatus 5 causes the analyte excess removing device 1 or the test piece holder 2 to assume the standby position. In this position, a test piece S which has been previously immersed in an urine analyte is placed in the holding groove 20 of the test piece holder 2 with a predetermined timing. Such placement of the test piece may be performed manually or automatically by a loader (not shown). When the test piece S is placed in the holding groove 20, the inclined guide surfaces 22a of the respective ridges 22 serve to smoothly guide the test piece S into the holding groove.

When the test piece S is placed in the holding groove 20 of the test piece holder 2, it is wet with an excessive amount of urine than is necessary for causing intended color reaction at the respective chemical pads s1-s8. However, since the upper capillary grooves 41 are formed at the respective ridges 22 to extend vertically, they suck the urine excess immediately by capillary action. The urine thus sucked falls down onto the side surfaces 24 of the test piece holder 2 through the capillary pores 42 which also provide additional capillary action for assisting suction of the urine excess. Further, the lower capillary grooves 43 on the respective side surfaces 24 of the test piece holder 2 also provides capillary action for additionally assisting downward pull of the urine excess. Thus, the combination of the upper capillary grooves 21, the capillary pores 22 and the lower capillary grooves serves to rapidly remove the urine excess from the test piece S and the holding groove 20. Moreover, since the lower capillary grooves 43 are much longer than the upper capillary grooves 41 and the capillary pores 42, they can provide a large capacity for repetitively performing urine excess removal (i.e., urine test).

The urine excess moving downward in the lower capillary groove ultimately collects at the tapered bottom end of the test piece holder 2 primarily due to capillary action and partially due to gravity after flowing along the tapering edges. However, since the test piece holder 2 is received substantially entirely in the receptacle 3, it is possible to prevent the urine excess from scattering to contaminate the various portions of the test apparatus 5 while moving downward on the test piece holder. The urine excess thus collected at the tapered bottom end of the test piece holder 2 is discharged through the discharge opening 31 into a collecting pan (not shown) provided at the bottom of the test apparatus 5.

After removal of the urine excess upon lapse of a predetermined time, the test piece S held by the test piece holder 2 is moved progressively to the measurement position by the transfer mechanism 51. During such movement, the chemical pads s₁-s₈ on the test piece S are successively subjected to detection by the optical sensor 52 for determination as to the degree of color reaction. After optical measurement, the test piece holder 2 is then moved to the standby position where the analyzed test piece S is replaced with a new one.

In this way, the urine excess present on the test piece S and in the holding groove 20 is effectively removed in a relatively short time. Thus, it is possible to prevent each chemical pad s₁-s₈ from being contaminated by a chemical substance or substances which may dissolve from any other pad in the urine excess. Further, after replacement of the analyzed test piece S with a new one, it is also possible to prevent or restrain the new test piece from being contaminated by the urine excess of the previous test piece remaining in the holding groove 20.

As previously described, the test piece holder 2 may be made of ABS resin by molding. In practice, the test piece holder 2 may be made of any resin, provided that the selected resin has good affinity with water for enhancing the capillary action of the upper capillary grooves 41, the capillary pores 42 and the lower capillary grooves 43. For this reason, the selected resin may preferably contain a polymer component or components having a hydrophilic group or groups such as -OH, -SO₃H, -COOH, -NH₂ and -CO.

On the other hand, the receptacle 3, which may be also made of ABS resin as in the illustrated embodiment, does not need to have good affinity with water. For this reason, the receptacle 3 may be made of any other resin.

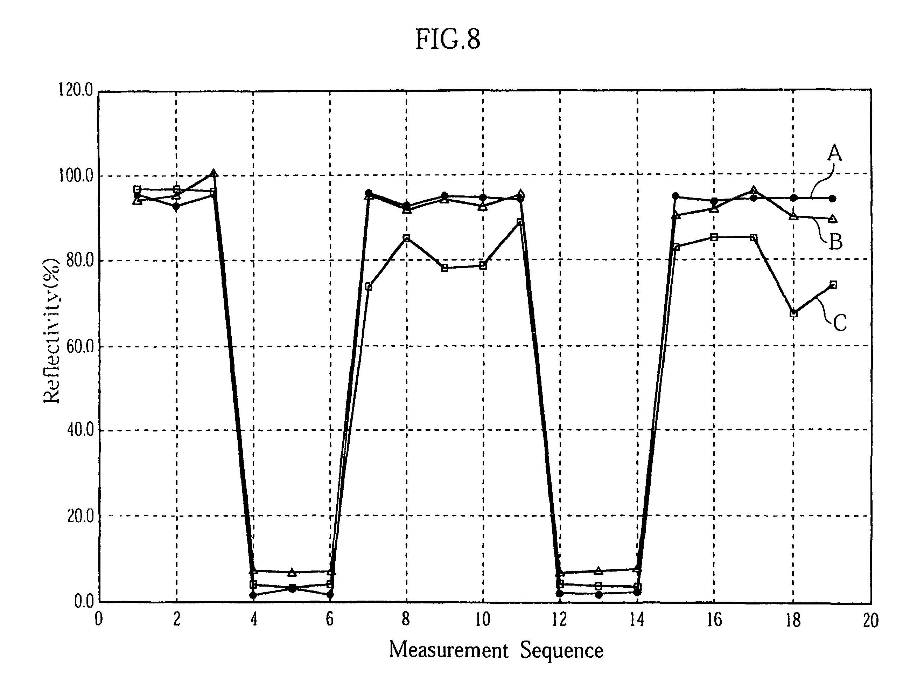

Fig. 8 is a graph showing comparison in excess removing ability between the analyte excess removing device of the present invention and that of the prior art (Fig. 9) . The graph of Fig. 8 is based on the results of tests wherein, for determination of urine glucose concentration, a series of low-concentration samples (negative samples) and a series of high-concentration samples (positive samples) were alternately analyzed. More specifically, in the tests, analysis was performed first for a sub-series of negative samples (1st-3rd samples), then for a sub-series of positive samples (4th-6th samples), again for another sub-series of negative samples (7th-11th samples), again for another sub-series of positive samples (12th-14th samples), and finally for a further sub-series of negative samples (15th-19th samples).

In the graph of Fig. 8, the curve A represents the results obtained for the overall series of 1st-19th samples when the analyte excess removing device 1 of the present invention was used for placing each test piece. The curve B represents the results obtained for the overall series of 1st-19th samples when the analyte excess removing device (a) of the prior (Fig. 9) was used for placing each test piece. The curve C represents the results obtained for the overall series of 1st-19th samples when the analyte excess removing device (a) of the prior art was used without applying pump (vacuum) suction.

The curve C of the graph indicates that the results of glucose concentration measurement shift clearly to the positive side from the expected value when measurement was performed for a series of negative samples after performing measurement for a series of positive samples. This means that the excess of the positive samples remaining on the test piece holder gave adverse influences on the subsequent analysis of the negative samples. By contrast, no remarkable shift or deviation was observed with respect to the curves A and B even when measurement was performed for a series of negative samples after performing measurement for a series of positive samples. Thus, it can be concluded that the analyte excess removing device of the present invention is as effective as the prior art pumping type excess removing device and is therefore more advantageous than it in that no pump (i.e., energy consumption) is needed.

Tables 1 and 2 represent the results of measurement of urine glucose concentration which were performed for respective sets of known-concentration samples, each set including 10 samples of a given glucose concentration (Omg/dl, 30mg/dl, 60mg/dl, 250mg/dl, 1,500mg/dl, respectively). Table 1 shows the results of concentration measurement (as determined by reflectivity) performed with the use of the excess removing device 1 of the present invention, whereas Table 2 illustrates the results of concentration measurement performed with the use of the prior art excess removing device (a) illustrated in Fig. 9. In these tables, the notation "S.D." represents "Standard Deviation".

**TABLE 1**

| GLU(mg/dI) | | | | | |
|---|---|---|---|---|---|
| | 0 | 30 | 60 | 250 | 1500 |
| 1 | 92.0 | 77.4 | 65.2 | 45.5 | 29.5 |
| 2 | 91.6 | 79.3 | 66.6 | 45.1 | 28.6 |
| 3 | 92.2 | 79.3 | 66.3 | 45.9 | 29.7 |
| 4 | 92.2 | 78.3 | 67.5 | 43.5 | 34.0 |
| 5 | 91.4 | 77.8 | 68.0 | 41.3 | 33.0 |
| 6 | 91.7 | 77.8 | 63.2 | 46.5 | 31.8 |
| 7 | 92.1 | 79.0 | 69.2 | 41.5 | 33.7 |
| 8 | 92.4 | 78.2 | 70.6 | 43.4 | 31.6 |
| 9 | 92.2 | 78.4 | 67.8 | 42.4 | 33.1 |
| 10 | 91.7 | 78.3 | 66.3 | 41.0 | 33.8 |
| MEAN | 92.0 | 78.4 | 67.1 | 43.6 | 31.9 |
| S.D. | 0.33 | 0.64 | 2.07 | 2.01 | 1.98 |

**TABLE 2**

| GLU(mg/dl) | | | | | |
|---|---|---|---|---|---|
| | 0 | 30 | 60 | 250 | 1500 |
| 1 | 103.22 | 94.25 | 85.00 | 52.97 | 37.88 |
| 2 | 102.22 | 94.50 | 82.81 | 59.77 | 37.66 |
| 3 | 101.01 | 94.30 | 83.77 | 57.71 | 40.60 |
| 4 | 99.46 | 95.56 | 85.18 | 57.62 | 40.78 |
| 5 | 101.66 | 92.76 | 85.46 | 59.23 | 38.82 |
| 6 | 101.15 | 93.98 | 84.58 | 56.83 | 37.10 |
| 7 | 99.50 | 94.41 | 84.73 | 59.26 | 35.03 |
| 8 | 101.37 | 94.99 | 85.33 | 54.52 | 29.67 |
| 9 | 101.83 | 95.37 | 86.80 | 56.94 | 39.18 |
| 10 | 101.11 | 95.36 | 80.70 | 60.78 | 35.42 |
| MEAN | 101.3 | 94.5 | 84.4 | 57.6 | 37.2 |
| S.D. | 1.14 | 0.83 | 1.68 | 2.41 | 3.27 |

As appreciated from comparison between Tables 1 and 2, when concentration measurement was performed with respect to a set of high-concentration samples (see the results for 1,500mg/dl samples), the standard deviation of the measurement results obtained with the use of the excess removing device 1 of the present invention was 1.98 which was much improved over that (3.27) obtained with the use of the use of the prior art excess removing device (a) . In the case of the high-concentration samples, a large amount of oxygen was needed for enzyme reaction, and the presence of an urine excess which blocked oxygen supply resulted in measurement deviations. However, the excess removing device of the illustrated embodiment worked effectively to remove the urine excess, thereby reducing the degree of measurement deviations.

As described above, the analyte excess removing device 1 (consisting of the test piece holder 2 and the receptacle) according to the illustrated embodiment is entirely made of a resin material and requires no suction pump or its related accessories. Thus, the analyte excess removing device 1 is economically advantageous. Further, the test piece holder 2 and the receptacle 3 can be washed or flushed whole and therefore maintained very easily.

The present invention being thus described, it is apparent that the same may be varied in many ways. For instance, the present invention may be applied to any kind of test piece holder for holding a test piece which is immersed in or impregnated with a liquid analyte (not limited to urine) for chemical reaction. Such variations are intended to be included within the scope of the following claims.

## Claims

1. A test piece holder comprising an elongate top surface, and a pair of side surfaces (24) located below the top surface, the top surface being provided with a test piece holding groove (20) defined by an elongate bottom wall (21) and a pair of ridges (22) each rising from a respective longitudinal edge of the bottom wall (21), the bottom wall (21) being formed with a plurality of capillary pores (42),
**characterized in that** each of the ridges (22) is formed with a plurality of upper capillary grooves (41) extending vertically to open into the test piece holding groove (20), the plurality of capillary pores (42) correspond to and communicate with the upper capillary grooves (41), the capillary pores (42) being open toward a respective one of the side surfaces (24).

2. The test piece holder according to claim 1, wherein each of the side surfaces (24) is formed with a plurality of lower capillary grooves (43) in corresponding relationship to and in communication with the upper capillary grooves (41) and the capillary pores (42).

3. The test piece holder according to claim 2, wherein the upper capillary grooves (41), the capillary pores (42) and the lower capillary grooves (43), respectively, are arranged in a row at a constant interval.

4. The test piece holder according to claim 2 or 3, wherein the upper capillary grooves (41), the capillary pores (42) and the lower capillary grooves (43) are equal in width.

5. The test piece holder according to claim 4, wherein the width of the upper capillary grooves (41), the capillary pores (42) and the lower capillary grooves (43) is 0.4-1.0 mm.

6. The test piece holder according to claim 5, wherein the width of the upper capillary grooves (41), the capillary pores (42) and the lower capillary grooves (43) is 0.6-0.8 mm.

7. The test piece holder according to any one of claims 1 to 6, wherein each of the upper capillary grooves (41) has a depth which is larger than its width.

8. The test piece holder according to any one of claims 1 to 7, wherein each of the lower capillary grooves (43) has a depth which is larger than its width.

9. The test piece holder according to any one of claims 1 to 8, wherein each of the upper capillary grooves (41) penetrates horizontally through a respective one of the ridges (22).

10. The test piece holder according to any one of claims 1 to 9, wherein each of the side surfaces (24) tapers downward.

11. A test piece holder comprising an elongate top surface, and a pair of side surfaces (24) located below the top surface, the top surface being provided with a test piece holding groove (20) defined by an elongate bottom wall (21) and a pair of ridges (22) each rising from a respective longitudinal edge of the bottom wall (21), the bottom wall (21) being formed with a plurality of capillary pores (42),
**characterized in that** the plurality of capillary pores (42) communicates with the test piece holding groove (20), each of the side surfaces (24) being formed with a plurality of lower capillary grooves (43) in corresponding relationship to and in communication with the capillary pores (42).

12. An analyte excess removing device comprising the test piece holder (2) according to any one of claims 1 to 11, and a receptacle (3) for receiving the test piece holder (2) with the test piece holding groove (20) exposed upwardly.

13. The analyte excess removing device according to claim 12, wherein the receptacle (3) has a bottom discharge opening (31).

14. The analyte excess removing device according to claim 12 or 13, wherein the receptacle (3) tapers downward.

## Patentansprüche

1. Probestückhalter umfassend eine längliche obere Fläche und ein Paar von unterhalb der oberen Fläche angeordneten Seitenflächen (24), wobei die obere Fläche mit einer Haltenut (20) für das Probenstück versehen ist, die von einer länglichen Bodenwand (21) und von einem Paar von sich jeweils von einer Längskante der Bodenwand (21) nach oben erhebenden Rippen (22) definiert wird und wobei die Bodenwand (21) mit einer Vielzahl von Kapilarporen (42) ausgebildet ist,
**dadurch gekennzeichnet, daß** jede der Rippen (22) mit einer Vielzahl von oberen, sich vertikal erstreckenden und in die Haltenut (20) des Probestückhalters mündenden Kapilarnuten (41) ausgebildet ist, wobei die Vielzahl von Kapilarporen (42) den oberen Kapilarnuten (41) entsprechen und mit diesen in Verbindung stehen und wobei die Kapilarporen (42) in Richtung einer der entsprechenden Seitenflächen (24) offen sind.

2. Probestückhalter nach Anspruch 1, wobei jede der Seitenflächen (24) mit einer Vielzahl von unteren Kapilamuten (43) in entsprechender Beziehung zu und in Verbindung stehend mit den oberen Kapilarnuten (41) und den Kapliarporen (42) ausgebildet ist.

3. Probestückhalter nach Anspruch 2, wobei die oberen Kapilarnuten (41), die Kapilarporen (42) bzw. die unteren Kapilarnuten (43) in einer Reihe mit konstantem Abstand angeordnet sind.

4. Probestückhalter nach Anspruch 2 oder 3, wobei die oberen Kapilarnuten (41), die Kapilarporen (42) und die unteren Kapilarnuten (43) die gleiche Breite aufweisen.

5. Probestückhalter nach Anspruch 4, wobei die Breite der oberen Kapilarnuten (41), der Kapilarporen (42) und der unteren Kapilarnuten (43) 0,4 - 1.0mm beträgt.

6. Probestückhalter nach Anspruch 5, wobei die Breite der oberen Kapilamuten (41), der Kapilarporen (42) und der unteren Kapilarnuten (43) 0,6 - 0,8mm beträgt.

7. Probestückhalter nach einem der Ansprüche 1 bis 6, wobei jede der oberen Kapilarnuten (41) eine Tiefe aufweist, die größer als ihre Breite ist.

8. Probestückhalter nach einem der Ansprüche 1 bis 7, wobei jede der unteren Kapilarnuten (43) eine Tiefe aufweist, die größer als ihre Breite ist.

9. Probestückhalter nach einem der Ansprüche 1 bis 8, wobei die oberen Kapilarnuten (41) durch eine der entsprechenden Rippen (22) läuft.

10. Probestückhalter nach einem der Ansprüche 1 bis 9, wobei sich jede der Seitenflächen (24) nach unten verjüngt.

11. Probestückhalter umfassend eine längliche obere Fläche und ein Paar von unterhalb der oberen Fläche angeordneten Seitenflächen (24), wobei die obere Fläche mit einer Haltenut (20) für das Probenstück versehen ist, die von einer länglichen Bodenwand (21) und von einem Paar von sich jeweils von einer Längskante der Bodenwand (21) nach oben erhebenden Rippen (22) definiert wird und wobei die Bodenwand (21) mit einer Vielzahl von Kapilarporen (42) ausgebildet ist,
**dadurch gekennzeichnet, daß** die Vielzahl der Kapilarporen (42) mit der Haltenut (20) für das Probenstück in Verbindung stehen, wobei jede der Seitenflächen (24) mit einer Vielzahl von in entsprechender Beziehung zu und in Verbindung mit den Kapilarporen (42) stehenden, unteren Kapilarnuten (43) ausgebildet ist

12. Vorrichtung zum Entfernen eines Überschusses eines Analyten, aufweisend einen Probestückhalter (2) entsprechend einem der Ansprüche 1 bis 11 und einen Behälter (3) zur Aufnahme des Probestückhalters (2) mit der nach oben freigelegten Haltenut (20) für das Probenstück.

13. Vorrichtung zum Entfernen eines Überschusses eines Analyten nach Anspruch 12, wobei der Behälter (3) eine Entleeröffnung (31) am Boden aufweist.

14. Vorrichtung zum Entfernen eines Überschusses eines Analyten nach Anspruch 12 oder 13, wobei sich der Behälter (3) nach unten verjüngt.

## Revendications

1. Support d'échantillon, comprenant une surface supérieure allongée et une paire de surfaces latérales (24) situées au-dessous de la surface supérieure, la surface supérieure étant prévue avec une rainure de support d'échantillon (20) définie par une paroi inférieure allongée (21) et une paire de saillies (22), chacune s'élevant à partir d'un bord longitudinal respectif de la paroi inférieure (21), la paroi inférieure (21) étant formée avec une pluralité de pores capillaires (42),
**caractérisé en ce que** chacune des saillies (22) est formée avec une pluralité de rainures capillaires supérieures (41) s'étendant verticalement pour s'ouvrir dans la rainure de support d'échantillon (20), la pluralité de pores capillaires (42) correspond aux rainures capillaires supérieures (41) et communique avec celles-ci, les pores capillaires (42) étant ouvertes en direction d'une surface respective des surfaces latérales (24).

2. Support d'échantillon selon la revendication 1, dans lequel chacune des surfaces latérales (24) est formée avec une pluralité de rainures capillaires inférieures (43) dans une relation correspondante et en communication avec les rainures capillaires supérieures (41) et les pores capillaires (42).

3. Support d'échantillon selon la revendication 2, dans lequel les rainures capillaires supérieures (41), les pores capillaires (42) et les rainures capillaires inférieures (43), respectivement, sont agencées dans une rangée à intervalles constants.

4. Support d'échantillon selon la revendication 2 ou 3, dans lequel les rainures capillaires supérieures (41), les pores capillaires (42) et les rainures capillaires inférieures (43) sont de largeur identique.

5. Support d'échantillon selon la revendication 4, dans lequel la largeur des rainures capillaires supérieures (41), des pores capillaires (42) et des rainures capillaires inférieures (43) mesure de 0,4 à 1,0 mm.

6. Support d'échantillon selon la revendication 5, dans lequel la largeur des rainures capillaires supérieures (41), des pores capillaires (42) et des rainures capillaires inférieures (43) mesure de 0,6 à 0,8 mm.

7. Support d'échantillon selon l'une quelconque des revendications 1 à 6, dans lequel chacune des rainures capillaires supérieures (41) présente une profondeur qui est supérieure à sa largeur.

8. Support d'échantillon selon l'une quelconque des revendications 1 à 7, dans lequel chacune des rainures capillaires inférieures (43) présente une profondeur qui est supérieure à sa largeur.

9. Support d'échantillon selon l'une quelconque des revendications 1 à 8, dans lequel chacune des rainures capillaires supérieures (41) pénètre horizontalement à travers une saillie respective des saillies (22).

10. Support d'échantillon selon l'une quelconque des revendications 1 à 9, dans lequel chacune des surfaces latérales (24) forme un cône vers le bas.

11. Support d'échantillon, comprenant une surface supérieure allongée et une paire de surfaces latérales (24) situées au-dessous de la surface supérieure, la surface supérieure étant prévue avec une rainure de support d'échantillon (20) définie par une paroi inférieure allongée (21) et une paire de saillies (22), chacune s'élevant à partir d'un bord longitudinal respectif de la paroi inférieure (21), la paroi inférieure (21) étant formée avec une pluralité de pores capillaires (42),
**caractérisé en ce que** la pluralité de pores capillaires (42) communique avec la rainure de support d'échantillon (20), chacune des surfaces latérales (24) étant formée avec une pluralité de rainures capillaires inférieures (43) en relation correspondante et en communication avec les pores capillaires (42).

12. Dispositif pour éliminer un excès d'analyte comprenant le support d'échantillon (2) selon l'une quelconque des revendications 1 à 11 et un réceptacle (3) pour recevoir le support d'échantillon (2), la rainure de support d'échantillon (20) étant exposée vers le haut.

13. Dispositif pour éliminer un excès d'analyte selon la revendication 12, dans lequel le réceptacle (3) comporte une ouverture d'écoulement inférieure (31).

14. Dispositif pour éliminer un excès d'analyte selon la revendication 12 ou 13, dans lequel le réceptacle (3) forme un cône vers le bas.
